# EUROPEAN PATENT APPLICATION

(11) **EP 4 701 216 A1**
(43) Date of publication of application: **25.02.2026**
(21) Application number: 25197345.9
(22) Date of filing: 21.08.2025
(51) Int. Cl.: H04N 23/68

(54) **INTELLIGENT IMAGE STABILIZATION**

(30) Priority: 21.08.2024 US 202463685571 P
(71) Applicant: Tyco Fire & Security GmbH, 8212 Neuhausen am Rheinfall (CH)
(72) Inventor: IRVINE, Christopher Raymond, Craigavon (GB); MARSHALL, George, Milwaukee , Wisconsin (US); NEILL, Terence, Lisburn (GB)
(74) Representative: Meissner Bolte Nürnberg

(57) **Abstract**

Example implementations include a method, apparatus and computer-readable medium of intelligent digital image stabilization, comprising obtaining a first full image from a sensor. The implementations further include detecting at least one focal point of the first full image. Additionally, the implementations further include obtaining a second full image from the sensor including the at least one focal point. Additionally, the implementations further include determining a vector difference between the at least one focal point within the second full image and the at least one focal point within the first full image. Additionally, the implementations further include cropping the second full image based on the vector difference to generate a display image. Additionally, the implementations further include displaying the display image.

## Description

This patent application claims the benefit of U.S. Provisional Application No. 63/685,571, filed on August 21, 2024, titled "INTELLIGENT IMAGE STABILIZATION." The disclosure of the prior application is hereby incorporated by reference in its entirety.

The described aspects relate to image stabilization in video captured using video sensors.

Aspects of the present disclosure relate generally to video capture systems, and more particularly, to image stabilization of videos by predicting motion and sensing movement and the effect of movement on the video capture systems.

Embodiments according to the invention are disclosed in particular in the appended claims. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Video recordings are often subject to blurriness due to shakiness caused by movement (e.g., panning, tilting, and rotation) of the camera capturing the recording during the recording process. Various techniques exist for image stabilization and are intended to reduce or minimize blurriness caused by such panning, tilting, and rotation of the camera. Mechanical image stabilization techniques for video recording using a camera exist that rely solely on hardware such as gyroscopes, mechanical arms, and/or other hardware. Existing electronic image stabilization (EIS) can be reliant on physical components such as gyroscopes. For example, gyroscopes can be useful in compensating for physical movement of the camera during recording by measuring camera movements, which measurements can then be processed to stabilize the video. Compensating for physical movement can be important, because as a camera moves it can be distracting and cause the production quality of the video to appear low. Furthermore, in extreme instances physical movement of the camera capturing the video can cause motion sickness when the video is later viewed. Therefore, mitigating the effects of physical movement on a camera and/or video recording can be desirable.

In an example aspect described herein, a video or image captured by a camera can be considered a full frame. In order to mitigate movement that would be shown in display of every full frame, edges or portions of the full frame can be cropped out or otherwise view bounded to maintain the appearance of a fixed and locked frame viewpoint. This fixed and locked frame viewpoint effect can also be achieved by maintaining particular selected objects in the field of view of the video. In an example, during an earthquake, where a surveillance camera may shake due to physical movement, the video captured by such camera could benefit from mitigation of physical movement. Other scenarios that would benefit from mitigation of physical movement include those where a camera may be zoomed in or focused in on a distant object during recording, where any movements at the camera may be amplified. In some examples, the video or images captured by a camera may be used by the camera in the form of feedback to a system including an electro-mechanical arm that is coupled with or otherwise holds the camera, in an attempt to reduce camera movement and/or keep the view being captured by the camera locked on a particular position. This feedback can be based on video intelligence running off the camera/sensor view. While aspects herein are generally described in terms of visible light spectrum cameras, UV, thermal/infrared, night-vision, and/or other types of cameras and/or sensors could also benefit from the principles described herein.

An example aspect includes a method of intelligent digital image stabilization, comprising obtaining a first full image from a sensor. The method further includes detecting at least one focal point (i.e., a reference point) of the first full image. Additionally, the method further includes obtaining a second full image from the sensor including the at least one focal point. Additionally, the method further includes determining a vector difference between the at least one focal point within the second full image and the at least one focal point within the first full image. Additionally, the method further includes cropping the second full image based on the vector difference to generate a display image. Additionally, the method further includes displaying the display image.

Another example aspect includes an apparatus for intelligent digital image stabilization, comprising one or more memories and one or more processors coupled with one or more memories and configured to perform, individually or in any combination, the following actions. The one or more processors are configured to obtain a first full image from a sensor. The one or more processors are further configured to detect at least one focal point of the first full image. Additionally, the one or more processors are further configured to obtain a second full image from the sensor including the at least one focal point. Additionally, the one or more processors are further configured to determine a vector difference between the at least one focal point within the second full image and the at least one focal point within the first full image. Additionally, the one or more processors are further configured to crop the second full image based on the vector difference to generate a display image. Additionally, the one or more processors are further configured to display the display image.

Another example aspect includes an apparatus for intelligent digital image stabilization, comprising means for obtaining a first full image from a sensor. The apparatus further includes means for detecting at least one focal point of the first full image. Additionally, the apparatus further includes means for obtaining a second full image from the sensor including the at least one focal point. Additionally, the apparatus further includes means for determining a vector difference between the at least one focal point within the second full image and the at least one focal point within the first full image. Additionally, the apparatus further includes means for cropping the second full image based on the vector difference to generate a display image. Additionally, the apparatus further includes means for displaying the display image.

Another example aspect includes a computer-readable medium having instructions stored thereon of intelligent digital image stabilization, wherein the instructions are executable by one or more processors to obtain a first full image from a sensor. The instructions are further executable to detect at least one focal point of the first full image. Additionally, the instructions are further executable to obtain a second full image from the sensor including the at least one focal point. Additionally, the instructions are further executable to determine a vector difference between the at least one focal point within the second full image and the at least one focal point within the first full image. Additionally, the instructions are further executable to crop the second full image based on the vector difference to generate a display image. Additionally, the instructions are further executable to display the display image.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

The disclosed aspects will hereinafter be described in conjunction with the appended drawings, provided to illustrate and not to limit the disclosed aspects, wherein like designations denote like elements, wherein dashed lines may indicate optional elements, and in which:
Fig. 1 is a diagram showing a camera, field of view, and subject, in accordance with various aspects of the present disclosure;
Fig. 2 is a diagram showing changes in a field of view and position of a subject based on camera position and/or orientation, in accordance with various aspects of the present disclosure;
Fig. 3 is a diagram showing changes in position of a subject in a field of view based on camera position and/or orientation, in accordance with various aspects of the present disclosure;
Fig. 4 is a block diagram of an example of a computer device having components configured to perform a method of intelligent digital image stabilization, in accordance with various aspects of the present disclosure;
Fig. 5 is a flowchart of an example of a method of intelligent digital image stabilization, in accordance with various aspects of the present disclosure;
Fig. 6 is a flowchart of additional aspects of the method of Fig. 5, in accordance with various aspects of the present disclosure;
Fig. 7 is a flowchart of additional aspects of the method of Fig. 5, in accordance with various aspects of the present disclosure;
Fig. 8 is a flowchart of additional aspects of the method of Fig. 5, in accordance with various aspects of the present disclosure;
Fig. 9 is a flowchart of additional aspects of the method of Fig. 5, in accordance with various aspects of the present disclosure; and
Fig. 10 is a flowchart of additional aspects of the method of Fig. 5, in accordance with various aspects of the present disclosure.

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

Intelligent image stabilization as described herein can include the utilization of various analytic techniques to stabilize, in real-time or near real-time, a live image captured by or coming from a video sensor (also referred to herein as a video camera, and/or camera sensor) to mitigate the effects of external physical interference on the video sensor causing unwanted video movement and degradation of video stream quality. In some aspects, cameras can be implemented individually or as part of subsystems or systems of surveillance, for example in or at one or more data centers, public or private secure or controlled access locations, or other facilities.

Intelligent image stabilization can be an effective method of compensating for physical movement of a camera sensor that manifests itself in video shake and/or instability of perspective during playback. Intelligent image stabilization can rely on accurate motion sensing for tracking the effect of movement, which may be caused by, for example, a handshake (i.e., a camera operator's hand shaking during video capture), vehicle motion, motion of a camera mount, or wind. The motion information is then integrated during the current video frame and used to compensate for the motion by cropping the viewable image (i.e., visual perspective) or using some means of electromechanical control to counter physical movement in real time.

Manual or Smart Setting of fixed object(s) in a video stream, feed, and/or recording can be accomplished in different manners in accordance with the aspects described herein. One or more algorithms and/or Artificial Intelligence (AI) and/or Machine Learning (ML) can be used for Smart Setting.

Accordingly, in some aspects, measurement of the differences between positions of static objects manually and/or automatically placed in one or more bounding boxes (e.g., virtually in an image processing and/or tracking computer program) can be used to generate vector differences of movement of the bounding boxes from frame to frame as required for computations used for successful image stabilization operations.

To elaborate, by implementing various bounding boxes from or using a computer program and/or an AI engine, the user or system processor can set one or more fixed object(s) within a frame or scene that are to be used as a reference and thereby keep the bounding box(es) stationary within the video stream. In some aspects a user can select the fixed object(s) they desire to be referenced for image stabilization based on one or more options provided by or made available from the AI Engine. Then, when the camera and/or image (i.e., frame) moves, a new bounding box returned by the AI engine can be used to compute the vector change of the sensor.

In some aspects the system can identify stationary within a view of a camera based on the AI engine returning a location of consistent and stable objects and identifying them as a suitable stable object. For example, the AI engine can determine that an object is a stationary object using image processing, such as determining an object type or category (e.g., an object type or category may be a building, street sign, tree, mountain, or other object type or category). Alternatively or additionally, the system can determine that an object is consistent and stable based on a comparison of the object from one frame to a next frame, over a series of frames, or otherwise.

In some aspects the system can use trajectory mapping of one or more objects within a view of a camera when there are minimal or no stable objects within the view. By determining or knowing actual and/or projected the trajectory of an object(s), a sudden global shift in object(s) trajectory can be used to counter sensor physical movement and stabilise the image. As an example, a monitored trajectory of one or more moving objects can be used as a reference trajectory for generating a projected or expected trajectory. This projected or expected trajectory and/or reference trajectory can be compared to a secondary trajectory that is measured and if a major deviation exists between the secondary trajectory and the projected or expected trajectory and/or reference trajectory, it can be inferred that a camera sensor physical movement has occurred or is occurring and a counter can be initiated.

### Image Area Comparison

In some aspects a user can select all or partial unobstructed and static areas of a scene to utilize comparison of raw pixel values (i.e., unprocessed data representing color and/or intensity of each pixel in an image) to compute movement. A rolling average across frames can be used to counter changing light levels throughout the day. Reverse Matrix calculations can measure the shift in pixel values in the matrix and stabilize accordingly.

Alternatively or additionally, a method of returning static areas of a frame based on extracting a constant background of an image can be employed using one or more algorithms and/or AI/ML, whereby smart logic can sense and/or determine a change in the background and compute a correction based on one or more operations to stabilize the image based on the static areas of the image.

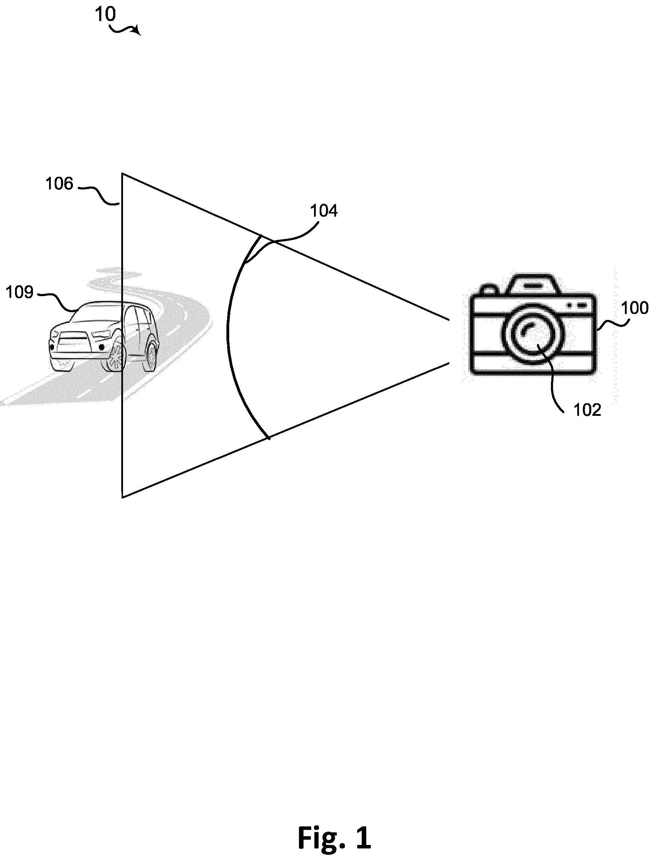

Referring to Fig. 1, a diagram 10 is shown in accordance with various aspects described herein. As shown in diagram 10, a computing device 100 (also referred to as an "apparatus") can be configured and operable to be selectively pointed in the direction of a subject 109 and capture one or more images and/or video of subject 109 via a lens 102. In various aspects a computing device 100 can be a standalone camera (e.g., a digital camera) or can be an integrated camera and/or components of an integrated camera coupled with (e.g., via a physical plug as a wired connection or via a local or remote wireless connection as communicated through a data network) or otherwise as part of another device (e.g., a smartphone, tablet, personal digital assistant, video game console, laptop computer, desktop computer, wearable computer such as glasses or a watch, or others). Generally, lens 102 of computing device 100 is configured and operable to capture images and/or video of subject 109 existing in an image plane 106 within a field of view 104. The field of view 104 can be changed by manipulating or otherwise moving the lens 102 of computing device 100 in space, such that lens 102 is pointed at any desired object, area, scene, location, or subject in space. When lens 102 of computing device 100 is maintained in a single position in physical space, field of view 104 is generally fixed (absent any zooming or outside influence). When lens 102 of computing device 100 is moved in space, field of view 104 can move. As a result of such movement of lens 102 in physical space, field of view 104 can be variable. As subject 109 moves in physical space it passes through field of view 104 of lens 102 when lens 102 is stationary and may eventually pass completely out of field of view 104. Moving lens 102 can maintain a moving subject 109 within field of view 104 of lens 102. Further, as a computing device 100 moves or is moved through an environment, field of view 104 of a lens 102 can also move, thereby changing where subject 109 is located in field of view 104. Field of view 104 generally includes x- and y- components and in some aspects can include z- components (e.g., if multiple cameras are used and a three-dimensional image is monitored and/or captured).

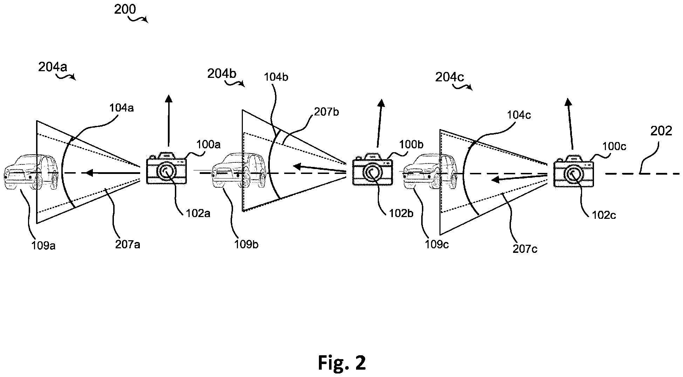

Referring to Fig. 2, a diagram 200 is shown with various camera orientations to illustrate movement of a field of view with respect to a fixed axis 202. As shown, in first positioning diagram 204a, second positioning diagram 204b, and third positioning diagram 204c, a fixed axis 202 can be a horizontal axis. First positioning diagram 204a, second positioning diagram 204b, third positioning diagram 204c and fixed axis 202 are shown to illustrate how movement of computing device 100a, 100b, and 100c affects a location of subject 109a, 109b, and 109c with respect to field of view 104a, 104b, and 104c, respectively.

**In** first positioning diagram 204a, a computing device 100a can be oriented with lens 102a directed in line with fixed axis 202, such that a field of view 104a is equally distributed around fixed axis 202 (i.e., half of field of view 104a is above fixed axis 202 and half of field of view 104b is below fixed axis 202.

**In** second positioning diagram 204b, a computing device 100b can be oriented with lens 102b directed above fixed axis 202, such that a field of view 104b is unequally distributed around fixed axis 202 (i.e., more than half of field of view 104b is above fixed axis 202 and less than half of field of view 104b is below fixed axis 202.

**In** third positioning diagram 204c, a computing device 100c can be oriented with lens 102c directed below fixed axis 202, such that a field of view 104c is unequally distributed around fixed axis 202 (i.e., less than half of field of view 104c is above fixed axis 202 and more than half of field of view 104c is below fixed axis 202.

As shown, as a result of changes in the orientation of computing device 100a, 100b, 100c, a subject 109a, 109b, 109c with a fixed location can be located at a different position with respect to field of view 104a, 104b, and 104c, respectively. In first positioning diagram 204a, subject 109a is located in the center of field of view 104a. In second positioning diagram 204b, subject 109b is located toward the bottom of or below the center of field of view 104b. In first positioning diagram 204c, subject 109c is located toward the top of or above the center of field of view 104c.

It should be understood that as computing device 100 moves, changes in the position and orientation of computing device 100 in space can affect field of view 104 and thereby the quality of images or video captured by computing device 100. Even small movements can lower the quality of images or video captured, and can reduce a viewer's enjoyment of the images or video by being distracting and/or even causing motion sickness in extreme cases.

As shown in first positioning diagram 204a, second positioning diagram 204b, and third positioning diagram 204c, a view bounded area 207a, 207b, and 207c, respectively, can cut one or more erroneous areas of images (e.g., at the edges) that are not directly relevant to the subject being video recorded and when viewed as a stream, these bounded areas can provide the impression of a seamless video stream without the effects of any physical movement on computing device 100.

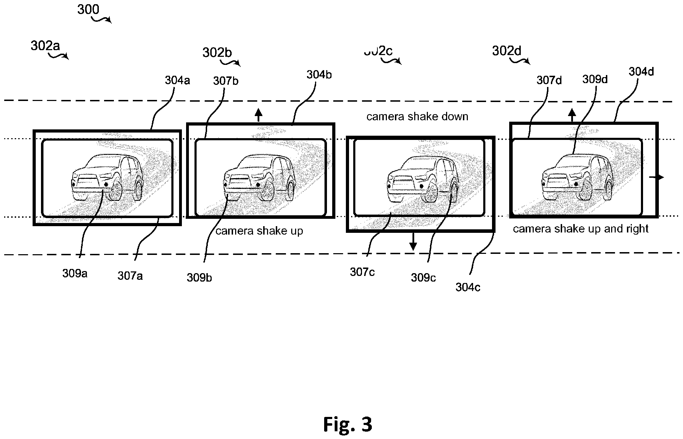

Although vertical positioning aspects are shown with respect to Fig. 2, it should be understood that horizontal positioning aspects are also contemplated in various aspects, some of which will be described with respect to Fig. 3.

Referring to Fig. 3, a diagram 300 is shown with various camera views 302a, 302b, 302c, and 302d to illustrate movement of a field of view 304a, 304b, 304c, and 304d with respect to a fixed subject 309a, 309b, 309c, and 309d. As shown, in first camera view 304a, second camera view 304b, third camera view 304c, and fourth camera view 304d, a fixed subject 309a, 309b, 309c, and 309d may have a stationary position. As a computing device (e.g., computing device 100) moves, a field of view of the computing device may change and thereby the position of the fixed subject may change within the field of view. First camera view 304a, second camera view 304b, third camera view 304c, and fourth camera view 304d are shown to illustrate how movement of a computing device (not shown) affects a location of subject 309a, 309b, 309c, and 309d with respect to field of view 304a, 304b, 304c, and 304d, respectively.

In first camera view 304a, a computing device can be oriented with a lens directed at a subject 309a, such that a field of view 304a is equally distributed around subject 309a (i.e., field of view 304a is positioned such that subject 309a is located in the center of field of view 304a).

In second camera view 304b, a position or orientation of computing device is different than in first camera view 304a (position tilted upwards or oriented higher than in first camera view 304a), such that a field of view 304b is unequally distributed around subject 309a (i.e., field of view 304b is positioned such that subject 309a is located toward the bottom of or below the center of field of view 304a).

In third camera view 304c, a position or orientation of computing device is different than in first camera view 304a (position tilted downwards or oriented lower than in first camera view 304a), such that a field of view 304c is unequally distributed around subject 309c (i.e., field of view 304c is positioned such that subject 309c is located toward the top of or above the center of field of view 304c).

In fourth camera view 304d, a position or orientation of computing device is different than in first camera view 304a (position tilted upwards and to the right or oriented higher and to the right as compared to first camera view 304a), such that a field of view 304d is unequally distributed around subject 309d (i.e., field of view 304d is positioned such that subject 309d is located toward the bottom of or below the center of field of view 304d and to the left of the center of field of view 304d).

As shown in first camera view 304a, second camera view 304b, third camera view 304c, and fourth camera view 304d, a view bounded area 307a, 307b, 307c, and 307d, respectively, can cut one or more erroneous areas of images (e.g., at the edges) that are not directly relevant to the subject being video recorded and when viewed as a stream, these bounded areas can provide the impression of a seamless video stream without the effects of any physical movement on computing device 100.

Although the camera views are shown as rectangular with respect to Fig. 3, it should be understood that other camera views are also contemplated, including oval, circular, triangular, and others, in accordance with various aspects.

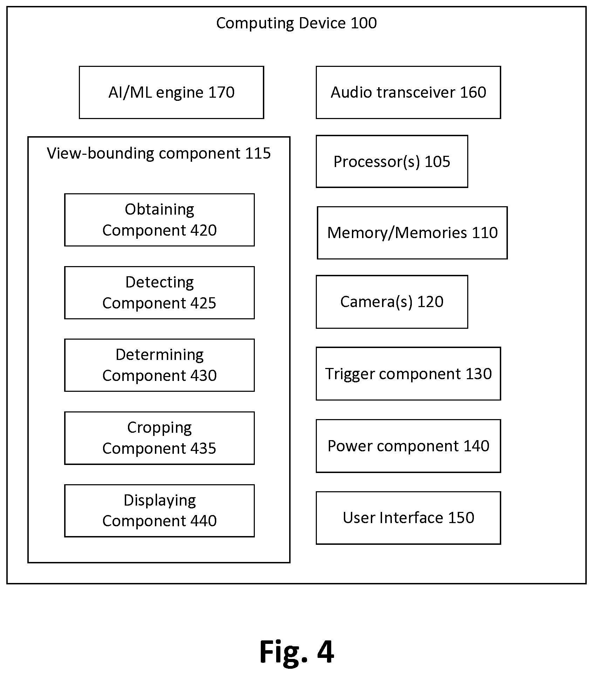

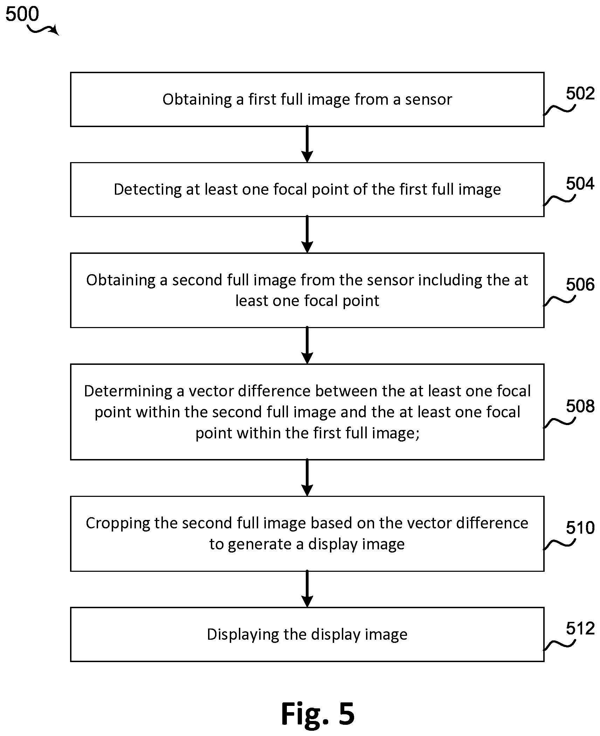

Referring to Fig. 4 and Fig. 5, in operation, computing device 100 may perform a method 500 of intelligent digital image stabilization, such as via execution of view-bounding component 115 by one or more processors 105 configured, individually or in any combination, to execute instructions to perform the following actions, and/or configured to communicate with one or more memories 110 to obtain the instructions.

At block 502, the method 500 includes obtaining a first full image from one or more sensor(s) (e.g., camera(s) 120). For example, in an aspect, computer device 100, one or more processors 105, one or more memories 110, view-bounding component 115, and/or obtaining component 420 may be configured to or may comprise means for obtaining a first full image from one or more sensor(s) (e.g., camera(s) 120).

For example, initially a user may start and/or end an imaging process by pressing a trigger component 130 (e.g., a physical button, switch, or displayed button on a user interface 150 such as a touchscreen display) and/or issuing a voice command captured by one or more audio transceivers 160 (which can be processed via the one or more processor(s) 105), which can begin a video recording of the computing device 100 via camera 120. Camera 120 can include various components of a camera as known now in the art or later developed (e.g., lens(es), motor(s), prism(s), light meter(s), mirror(s), sensor(s), and others). Once the video recording has begun or ended (i.e., for contemporaneous image stabilization while video recording or later image stabilizing of a pre-recorded video, respectively), the system can automatically, semi-automatically, or manually (e.g., via user selection via voice instruction or user interface interaction) obtain a first full image from one or more sensor(s) (e.g., camera(s) 120) at the detecting at block 504 (or from memory/memories 110 when a video is being post-processed).

Further, for example, the obtaining at block 502 may be performed so that first full image can serve as an initial or starting point that later operations are based around.

At block 504, the method 500 includes detecting at least one focal point of the first full image. For example, in an aspect, computer device 100, one or more processors 105, one or more memories 110, view-bounding component 115, and/or detecting component 425 may be configured to or may comprise means for detecting at least one focal point of the first full image. One or more algorithms stored in memory/memories 110 can be executed by one or more processors 105 in order to detect the at least one focal point. In various aspects the focal point can be an object, subject, person, item in the environment, or others. In some aspects, the first focal point can be determined according to stored or accessed artificial intelligence and/or machine learning models trained according to or based on previous image stabilization operations. AI/ML engine 170 can be used in implement such aspects.

Further, for example, the detecting at block 504 may be performed in order to determine a first reference point around which a bounded view would be beneficial and/or desirable.

At block 506, the method 500 includes obtaining a second full image from the sensor including the at least one focal point. For example, in an aspect, computer device 100, one or more processors 105, one or more memories 110, view-bounding component 115, and/or obtaining component 425 may be configured to or may comprise means for obtaining a second full image from the sensor including the at least one focal point.

For example, the obtaining at block 506 may include the system automatically, semi-automatically, or manually (e.g., via user selection via voice instruction or user interface interaction) obtain a second full image from one or more sensor(s) (e.g., camera(s) 120) at the detecting at block 506 (or from memory/memories 110 when a video is being post-processed). In some aspects the second image can be consecutive and directly follow the first image, while in some aspects the second image can be selected from a later point in a video capture or recording (i.e., not immediately following the first image).

Further, for example, the obtaining at block 506 may be performed in order to perform further operations that allow for comparison and determination of differences between images, which may indicate movement of a field of view of computing device 100 that requires image stabilization correction techniques to be applied in accordance with this disclosure.

At block 508, the method 500 includes determining a vector difference between the at least one focal point within the second full image and the at least one focal point within the first full image. For example, in an aspect, computer device 100, one or more processors 105, one or more memories 110, view-bounding component 115, and/or determining component 430 may be configured to or may comprise means for determining a vector difference between the at least one focal point within the second full image and the at least one focal point within the first full image.

For example, the determining at block 508 may include the one or more processors determining a vector difference between the at least one focal point within the second full image and the at least one focal point within the first full image via one or more calculations.

Further, for example, the determining at block 508 may be performed in order to determine whether there has been movement of a location of the at least one focal point in the second full image with respect to a location of the at least one focal point in the first full image. This movement of the location of the at least one focal point can indicate a movement of a field of view of computing device 100 that requires image stabilization correction techniques to be applied in accordance with this disclosure.

At block 510, the method 500 includes cropping the second full image based on the vector difference to generate a display image. For example, in an aspect, computer device 100, one or more processors 105, one or more memories 110, view-bounding component 115, and/or cropping component 435 may be configured to or may comprise means for cropping the second full image based on the vector difference to generate a display image.

For example, the cropping at block 510 may include the one or more processors executing one or more steps to size and select one or more boundaries of the images for display in the video stream or recording to selectively avoid maintaining in memory and/or displaying via a user interface 150 (e.g., a user interface display such as a video screen, touchscreen, or others).

Further, for example, the cropping at block 510 may be performed in order to maintain the appearance in the saved and/or displayed video stream or recording.

At block 512, the method 500 includes displaying the display image. For example, in an aspect, computer device 100, one or more processors 105, one or more memories 110, view-bounding component 115, and/or displaying component 440 may be configured to or may comprise means for displaying the display image.

For example, the displaying at block 512 may include the processor(s) 105 causing the user interface 150 to display the one or more display image(s).

Further, for example, the displaying at block 512 may be performed in order to show the video stream or recording captured by the computing device 100.

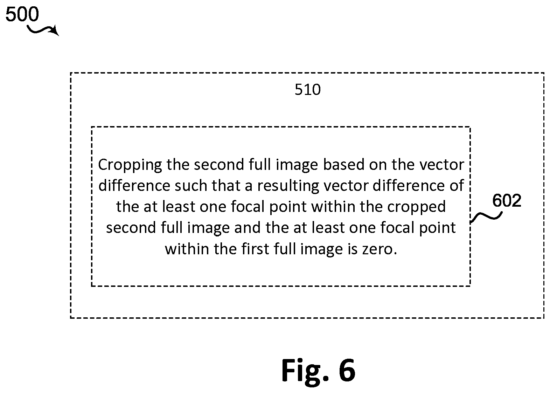

Referring to Fig. 6, in an alternative or additional aspect, at block 602, the cropping at block 510 of the second full image based on the vector difference to generate a display image further comprises cropping the second full image based on the vector difference such that a resulting vector difference of the at least one focal point within the cropped second full image and the at least one focal point within the first full image is zero.

For example, processor(s) 105 can cause a cropping or view-bounding of the second full image and/or the first full image such that the at least one focal point is maintained in position of a cropped or view-bounded second full image with respect to the location of the at least one focal point in the first full image and/or cropped or view-bounded first full image.

In an alternative or additional aspect, the vector difference indicates a change in three-dimensional orientation of the sensor.

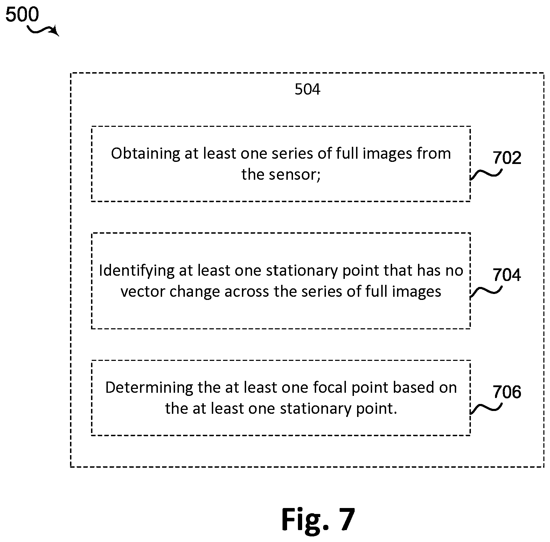

Referring to Fig. 7, in an alternative or additional aspect, at block 702, the detecting at block 504 of the at least one focal point of the first full image further includes obtaining at least one series of full images from the sensor.

For example, processor(s) 105 can cause one or more sensor(s) (e.g., camera(s) 120) to capture at least one series of one or more images and/or retrieve one or more series of previously captured image(s) from memory.

In this optional aspect, at block 704, the detecting at block 504 of the at least one focal point of the first full image further includes identifying at least one stationary point that has no vector change across the series of full images

For example, processor(s) 105 can identify the at least one stationary point that has no vector changes across the series of full images by checking one or more points in each of some or all of the series of images and determining that no vector changes have occurred across the series of full images as a result of the location of the point being maintained in a single location. This point or point(s) can then be designated as at least one stationary point. Based on the at least one stationary point maintaining a position across the series of images, it can be inferred that the at least one stationary point may be a stationary point in the environment. Alternatively or additionally, it can be inferred that the at least one stationary point may be part of the subject or otherwise a point of focus of the video. Alternatively or additionally, the at least one stationary point can provide continuity across the series of images and thereby provide a reference for image stabilization and maintaining a high quality video.

**In** this optional aspect, at block 706, the detecting at block 504 of the at least one focal point of the first full image further includes determining the at least one focal point based on the at least one stationary point.

For example, processor(s) 105 can determine that the at least one stationary point corresponds to the subject of the video in some aspects. Alternatively or additionally, processor(s) 105 can determine that the at least one stationary point corresponds to an item or object in the environment that can provide a reference for image stabilization and maintaining a high quality video.

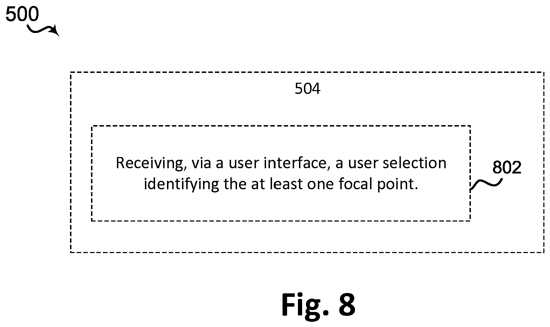

Referring to Fig. 8, in an alternative or additional aspect, at block 802, the detecting at block 504 of at least one focal point of the first full image further comprises receiving, via a user interface 150, a user selection identifying the at least one focal point.

For example, in some aspects a user can be prompted via a user interface (e.g., a touchscreen display) to select or otherwise identify a focal point such as a subject of a video. In various aspects a user can identify a focal point such as a subject of a video on a user interface 150 by selecting it. This can be done to ensure that image stabilization methods and/or processes is/are performed with respect to a correct subject so that the video is correctly processed and then later displayed. Misidentification of a subject could cause the video to clip or otherwise remove or cut off a desired subject of a video.

**In** an alternative or additional aspect, the at least one focal point is at least one bounding box, wherein the display image includes boundaries of the at least one bounding box.

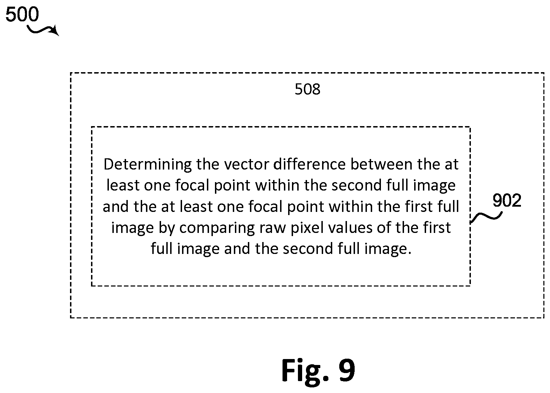

Referring to Fig. 9, in an alternative or additional aspect, at block 902, the determining at block 508 of the vector difference between the at least one focal point within the second full image and the at least one focal point within the first full image further comprises determining the vector difference between the at least one focal point within the second full image and the at least one focal point within the first full image by comparing raw pixel values of the first full image and the second full image.

For example, processor(s) 105 can assign and/or determine raw pixel values for the first full image and assign and/or determine raw pixel values for the second full image. Processor(s) 105 can then compare raw pixel values corresponding to the at least one focal point to determine whether any difference exists between the raw pixel values. This difference could indicate movement of the computing device 100 and to ensure that image stabilization methods and/or processes is/are performed with respect to a correct subject so that the video is correctly processed and then later displayed.

In an alternative or additional aspect, the at least one focal point is a constant background.

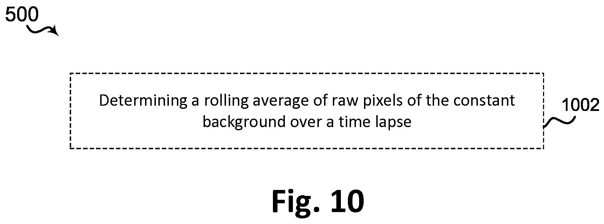

Referring to Fig. 10, in an alternative or additional aspect, at block 1002, the method 500 may further include determining a rolling average of raw pixels of the constant background over a time lapse. For example, in an aspect, computer device 100, one or more processors 105, one or more memories 110, view-bounding component 115, and/or determining component 440 may be configured to or may comprise means for determining a rolling average of raw pixels of the constant background over a time lapse.

For example, the determining at block 1002 may include processor(s) 105 determining, based on one or more calculations, a rolling average of raw pixels of a constant background (i.e., environment not including one or more subject or object of the video) over one or more full image frames for a selected or specific amount of time (i.e., number or quantity of frames).

Further, for example, the determining at block 1002 may be performed in order to determine boundaries of a bounding box be done to ensure that image stabilization methods and/or processes is/are performed with respect to a correct subject so that the video is correctly processed and then later displayed.

In some aspects, block 1002 can be a substitute for blocks 502, 504, and 506. In some aspects, block 1002 can be a substitute for blocks 502, 504, 506, and 508, where block 510 includes cropping the second image based on a difference between the constant background of an initial image and later image(s). In some aspects, block 1002 can be included elsewhere in the method shown in FIG. 5.

In an alternative or additional aspect, the at least one focal point is a trajectory of one or more objects.

In an alternative or additional aspect, the first full image and second full image contain pixels not included within the display image.

Some further example aspects of the apparatuses and methods described herein are provided in the following clauses. Any of these embodiments can be claimed in a separate claim, e.g. by substituting the word "Clause" by "Claim", in particular in the order as mentioned below and/or in any combination with any embodiment described above or with any of the features of the attached claims:
Clause 1. A method of intelligent digital image stabilization, comprising: obtaining a first full image from a sensor; detecting at least one focal point of the first full image; obtaining a second full image from the sensor including the at least one focal point; determining a vector difference between the at least one focal point within the second full image and the at least one focal point within the first full image; cropping the second full image based on the vector difference to generate a display image; and displaying the display image.
Clause 2. The method of clause 1, wherein cropping the second full image based on the vector difference to generate a display image further comprises cropping the second full image based on the vector difference such that a resulting vector difference of the at least one focal point within the cropped second full image and the at least one focal point within the first full image is zero.
Clause 3. The method of clause 1 or 2, wherein the vector difference indicates a change in three-dimensional orientation of the sensor.
Clause 4. The method of any of the above clauses, wherein detecting the at least one focal point of the first full image further comprises: obtaining at least one series of full images from the sensor; identifying at least one stationary point that has no vector change across the series of full images; and determining the at least one focal point based on the at least one stationary point.
Clause 5. The method of any of the above clauses, wherein detecting at least one focal point of the first full image further comprises receiving, via a user interface, a user selection identifying the at least one focal point.
Clause 6. The method of any of the above clauses, wherein the at least one focal point is at least one bounding box, wherein the display image includes boundaries of the at least one bounding box.
Clause 7. The method of any of the above clauses, wherein determining the vector difference between the at least one focal point within the second full image and the at least one focal point within the first full image further comprises determining the vector difference between the at least one focal point within the second full image and the at least one focal point within the first full image by comparing raw pixel values of the first full image and the second full image.
Clause 8. The method of any of the above clauses, wherein the at least one focal point is a constant background.
Clause 9. The method of clause 8, further comprising determining a rolling average of raw pixels of the constant background over a time lapse.
Clause 10. The method of any of the above clauses, wherein the at least one focal point is a trajectory of one or more objects.
Clause 11. The method of any of the above clauses, wherein the first full image and second full image contain pixels not included within the display image.
Clause 12. An apparatus for intelligent digital image stabilization, comprising: one or more memories; and one or more processors coupled with one or more memories and configured, individually or in combination, to: obtain a first full image from a sensor; detect at least one focal point of the first full image; obtain a second full image from the sensor including the at least one focal point; determine a vector difference between the at least one focal point within the second full image and the at least one focal point within the first full image; crop the second full image based on the vector difference to generate a display image; and display the display image.
Clause 13. The apparatus of clause 12, wherein to crop the second full image based on the vector difference to generate a display image the one or more processors are further configured to crop the second full image based on the vector difference such that a resulting vector difference of the at least one focal point within the cropped second full image and the at least one focal point within the first full image is zero.
Clause 14. The apparatus of clause 12 or 13, wherein the vector difference indicates a change in three-dimensional orientation of the sensor.
Clause 15. The apparatus of any of clauses 12 to 14, wherein to detect the at least one focal point of the first full image the one or more processors are further configured to: obtain series of full images from the sensor; identify at least one stationary point that has no vector change across the series of full images; and determine the at least one focal point based on the at least one stationary point.
Clause 16. The apparatus of any of clauses 12 to 15, wherein to detect at least one focal point of the first full image the one or more processors are further configured to receive, via a user interface, a user selection identifying the at least one focal point.
Clause 17. The apparatus of any of clauses 12 to 16, wherein the at least one focal point is at least one bounding box, wherein the display image includes boundaries of the at least one bounding box.
Clause 18. The apparatus of any of clauses 12 to 17, wherein to determine the vector difference between the at least one focal point within the second full image and the at least one focal point within the first full image the one or more processors are further configured to determine the vector difference between the at least one focal point within the second full image and the at least one focal point within the first full image by comparing raw pixel values of the first full image and the second full image.
Clause 19. The apparatus of any of clauses 12 to 18, wherein the at least one focal point is a constant background.
Clause 20. The apparatus of clause 19, wherein the one or more processors are further configured to determine a rolling average of raw pixels of the constant background over a time lapse.
Clause 21. The apparatus of any of clauses 12 to 20, wherein the at least one focal point is a trajectory of one or more objects.
Clause 22. The apparatus of any of clauses 12 to 21, wherein the first full image and second full image contain pixels not included within the display image.
Clause 23. An apparatus for intelligent digital image stabilization, comprising: one or more memories; and one or more processors coupled with one or more memories and configured, individually or in combination, to perform a method according to any of clauses 1 to 11 or according to or within any of the above mentioned embodiments.

Various aspects of the disclosure may take the form of an entirely or partially hardware aspect, an entirely or partially software aspect, or a combination of software and hardware. Furthermore, as described herein, various aspects of the disclosure (e.g., systems and methods) may take the form of a computer program product comprising a computer-readable non-transitory storage medium having processor accessible instructions (e.g., computer-readable and/or computer-executable instructions) such as computer software, encoded or otherwise embodied in such storage medium. Those instructions can be read or otherwise accessed and executed by one or more processors, individually or in combination, to perform or permit the performance of the operations described herein. The instructions can be provided in any suitable form, such as source code, compiled code, interpreted code, executable code, static code, dynamic code, assembler code, combinations of the foregoing, and the like. Any suitable computer readable non-transitory storage medium may be utilized to form the computer program product. For instance, the computer-readable medium may include any tangible non-transitory medium for storing information in a form readable or otherwise accessible by one or more computers or processor(s) functionally coupled thereto. Non-transitory storage media can include read-only memory (ROM); random access memory (RAM); magnetic disk storage media; optical storage media; flash memory, and so forth.

Aspects of this disclosure are described herein with reference to block diagrams and flowchart illustrations of processor-implemented methods, systems, devices, apparatuses, and computer program products. It can be understood that each block of the block diagrams and flowchart illustrations, and combinations of blocks in the block diagrams and flowchart illustrations, respectively, can be implemented by processor-accessible instructions. Such instructions may include, for example, computer program instructions (e.g., processor-readable and/or processor-executable instructions). The processor-accessible instructions may be built (e.g., linked and compiled) and retained in processor-executable form in one or multiple memory devices or one or many other processor-accessible non-transitory storage media. These computer program instructions also can be stored in a processor-readable memory, where in response to execution by one or more processors, individually or in combination, the computer program instructions can direct a computer, a computing device, or other programmable data processing apparatus to function in a particular manner, such that the instructions stored in the processor-readable memory produce an article of manufacture including processor-accessible instructions (e.g., processor-readable instructions and/or processor executable instructions) to implement the function specified in the flowchart blocks (individually or in a particular combination) or blocks in block diagrams (individually or in a particular combination). The computer program instructions can be loaded onto a computer, a computing device, or other programmable data processing apparatus to cause a series of operations to be performed on the computer or other programmable apparatus to produce a computer-implemented process. The series of operations may be performed in response to execution by one or more processor or other types of processing circuitry. Thus, such instructions that execute on the computer or other programmable apparatus provide operations for implementing the functions specified in the flowchart blocks (individually or in a particular combination) or blocks in block diagrams (individually or in a particular combination).

In some implementations, the processor-accessible instructions may be loaded or otherwise incorporated into a general purpose computer, a special purpose computer, or another programmable information processing apparatus to produce a particular machine, such that the operations or functions specified in flowchart blocks or other blocks presented in this disclosure can be implemented in response to execution at the computer or processing apparatus. More specifically, the loaded processor-accessible instructions may be accessed and executed by one or multiple processors, individually or in combination, or other types of processing circuitry. In response to execution, the loaded processor-accessible instructions provide the functionality described in connection with flowchart blocks (individually or in a particular combination) or blocks in block diagrams (individually or in a particular combination). Thus, such instructions which execute on a computer, a computing device, or other programmable data processing apparatus can create a means for implementing the functions specified in the flowchart blocks (individually or in a particular combination) or blocks in block diagrams (individually or in a particular combination).

As used in this disclosure, including the annexed drawings, in some aspects the terms "component," "module," "interface," "system," and the like are intended to refer to a computer-related entity or an entity related to an apparatus with one or more specific functionalities. The entity can be either hardware, a combination of hardware and software, software, or software in execution. One or more of such entities are also referred to as "functional elements." As an example, a component can be a process running on a processor, a processor, an object, an executable, a thread of execution, a program, and/or a computer. For example, both an application running on a server or network controller, and the server or network controller can be a component. One or more components can reside within a process and/or thread of execution and a component can be localized on one computer and/or distributed between two or more computers. Also, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which parts can be controlled or otherwise operated by program code executed by a processor. As yet another example, a component can be an apparatus that provides specific functionality through electronic components without mechanical parts, the electronic components can include a processor to execute program code that provides, at least partially, the functionality of the electronic components. As still another example, interface(s) can include I/O components or Application Programming Interface (API) components. While the foregoing examples are directed to aspects of a component, the exemplified aspects or features also apply to a system, module, and similar.

Unless otherwise expressly stated, it is in no way intended that any protocol, procedure, process, functionality or combination of functionalities, or method set forth herein be construed as requiring that its acts or steps be performed in a specific order. Accordingly, where a process or method claim does not actually recite an order to be followed by its acts or steps or it is not otherwise specifically recited in the claims or descriptions of the subject disclosure that he steps are to be limited to a specific order, it is in no way intended that an order be inferred, in any respect. This holds for any possible non-express basis for interpretation, including; matters of logic with respect to the arrangement of steps or operational flow; plain meaning derived from grammatical organization or punctuation; the number or type of aspects described in the specification or annexed drawings; or the like.

As used in this disclosure, including the annexed drawings, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in this specification and annexed drawings should be construed to mean "one or more" unless specified otherwise or clear from context to be directed to a singular form.

In addition, the terms "example" and "such as" are utilized herein to mean serving as an instance or illustration. Any aspect or design described herein as an "example" or referred to in connection with a "such as" clause is not necessarily to be construed as preferred or advantageous over other aspects or designs described herein. Rather, use of the terms "example" or "such as" is intended to present concepts in a concrete fashion. The terms "first," "second," "third," and so forth, as used in the claims and description, unless otherwise clear by context, is for clarity only and doesn't necessarily indicate or imply any order in time or space.

The term "processor," as utilized in this disclosure, refers to any computing processing unit or device comprising processing circuitry that can operate on data and/or signaling. A computing processing unit or device may include, for example, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor may include an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. A processor may also be implemented as a combination of computing processing units.

In addition, terms such as "store," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory. Moreover, a memory component can be removable or affixed to a functional element (e.g., device, server).

Simply as an illustration, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

The term "article of manufacture" as used herein is intended to encompass a computer program accessible from any computer-readable device, carrier, or media. For example, computer readable media can include but are not limited to magnetic storage devices (e.g., hard drive disk, floppy disk, magnetic strips, or similar), optical discs (e.g., compact disc (CD), digital versatile disc (DVD), blu-ray disc (BD), or similar), smart cards, and flash memory devices (e.g., card, stick, key drive, or similar).

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

What has been described above includes examples of one or more aspects and designs of this disclosure. It is, of course, not possible to describe every conceivable combination of components or methodologies for purposes of describing these examples, and it can be recognized that many further combinations and permutations of the present aspects are possible. Thus, all or a portion of any aspect may be utilized with all or a portion of any other aspect, unless stated otherwise. Accordingly, the aspects disclosed and/or claimed herein are intended to embrace all such alterations, modifications and variations that fall within the spirit and scope of the detailed description and the appended claims. Furthermore, to the extent that one or more of the terms "includes," "including," "has," "have," or "having" is used in either the detailed description or the claims, such term is intended to be inclusive in a manner similar to the term "comprising" as "comprising" is interpreted when employed as a transitional word in a claim.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method of intelligent digital image stabilization, comprising:
obtaining a first full image from a sensor;
detecting at least one focal point of the first full image;
obtaining a second full image from the sensor including the at least one focal point;
determining a vector difference between the at least one focal point within the second full image and the at least one focal point within the first full image;
cropping the second full image based on the vector difference to generate a display image; and
displaying the display image.

2. The method of claim 1, wherein cropping the second full image based on the vector difference to generate a display image further comprises cropping the second full image based on the vector difference such that a resulting vector difference of the at least one focal point within the cropped second full image and the at least one focal point within the first full image is zero.

3. The method of claim 1 or 2, wherein the vector difference indicates a change in three-dimensional orientation of the sensor.

4. The method of any of claims 1 to 3, wherein detecting the at least one focal point of the first full image further comprises:
obtaining at least one series of full images from the sensor;
identifying at least one stationary point that has no vector change across the series of full images; and
determining the at least one focal point based on the at least one stationary point.

5. The method of any of claims 1 to 4, wherein detecting at least one focal point of the first full image further comprises receiving, via a user interface, a user selection identifying the at least one focal point.

6. The method of any of claims 1 to 5, wherein the at least one focal point is at least one bounding box, wherein the display image includes boundaries of the at least one bounding box.

7. The method of any of claims 1 to 6, wherein determining the vector difference between the at least one focal point within the second full image and the at least one focal point within the first full image further comprises determining the vector difference between the at least one focal point within the second full image and the at least one focal point within the first full image by comparing raw pixel values of the first full image and the second full image.

8. The method of any of claims 1 to 7, wherein the at least one focal point is a constant background.

9. The method of claim 8, further comprising determining a rolling average of raw pixels of the constant background over a time lapse.

10. The method of any of claims 1 to 9, wherein the at least one focal point is a trajectory of one or more objects.

11. The method of any of claims 1 to 10, wherein the first full image and second full image contain pixels not included within the display image.

12. An apparatus for intelligent digital image stabilization, comprising:
one or more memories; and
one or more processors coupled with one or more memories and configured, individually or in combination, to perform a method according to any of claims 1 to 11.
